(19) Europäisches Patentamt
European Patent Office
Office européen des brevets

(11) Veröffentlichungsnummer: **0 019 738**
**B1**

(12) # EUROPÄISCHE PATENTSCHRIFT

(45) Veröffentlichungstag der Patentschrift: **27.04.83**

(51) Int. Cl.³: **C 08 F 283/12** // G02B1/04, (C08F283/12, 220/20)

(21) Anmeldenummer: **80102343.3**

(22) Anmeldetag: **30.04.80**

(54) **Verwendung von hydrophilen, vernetzten, modifizierten Organopolysiloxanen in Form von Kontaktlinsen oder als Bestandteile von Kontaktlinsen.**

(30) Priorität: **02.05.79 DE 2917754**

(43) Veröffentlichungstag der Anmeldung: **10.12.80 Patentblatt 80/25**

(45) Bekanntmachung des Hinweises auf die Patenterteilung: **27.04.83 Patentblatt 83/17**

(84) Benannte Vertragsstaaten: **AT BE CH DE FR GB IT LI NL SE**

(56) Entgegenhaltungen:
**DE-A-2 718 998**
**DE-A-2 844 078**
**FR-A-2 107 378**
**FR-A-2 365 606**
**FR-A-2 398 084**
**GB-A-1 149 935**

**Die Akte enthält technische Angaben, die nach dem Eingang der Anmeldung eingereicht wurden und die nicht in dieser Patentschrift enthalten sind.**

(73) Patentinhaber: **WACKER-CHEMIE GMBH,** ***Prinzregentenstrasse 22, D-8000 München 22 (DE)***

(72) Erfinder: **Deubzer, Bernward, Dr.Dipl,-Chem., Virchowstrasse 14, D-8263 Burghausen (DE)**
Erfinder: **Brunner, Erich, Gschwandt 70, A-4810 Gmunden (AT)**
Erfinder: **Burkhardt, Jürgen, Isenbreite 25, D-8261 Winhöring (DE)**
Erfinder: **Sallersbeck, Konrad, Schiessplatzweg 24, D-8263 Burghausen (DE)**

**EP 0 019 738 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Verwendung von hydrophilen, vernetzten, modifizierten Organopolysiloxanen in Form von Kontaktlinsen oder als Bestandteile von Kontaktlinsen

Aus FR-A-2 365 606 (der Öffentlichkeit bekannt seit 21. April 1978, Anmelder: Bausch & Lomb Incorporated) sind in Form von Kontaktlinsen vorliegende, hydrophile, vernetzte, durch Polymerisation von z.B. 2-Hydroxypropylmethacrylat, also einem Hydroxyalkylmethacrylat, in Gegenwart vom jeweiligen Organopolysiloxan modifizierte Organopolysiloxane bereits bekannt. Diese bekannten modifizierten Organopolysiloxane sind Diorganopolysiloxane und sogenannte IPN-Systeme. Gegenüber diesen bekannten modifizierten Organopolysiloxanen haben die erfindungsgemäss verwendeten modifizierten Organopolysiloxane insbesondere die Vorteile, dass sie aus leichter zugänglichem Organopolysiloxan erhältlich sind und dass sie härter sind. Weil die erfindungsgemäss verwendeten modifizierten Organopolysiloxane härter sind, kann mit Kontaktlinsen, die aus diesen modifizierten Organopolysiloxanen bestehen oder deren Linsenkörper solches modifiziertes Organopolysiloxan bildet, mit Hornhautverkrümmung verbundene Fehlsichtigkeit, wie Astigmatismus, besser korrigiert werden.

Gegenstand der Erfindung ist die Verwendung von hydrophilen, vernetzten, durch Polymerisation von Hydroxyalkylmethacrylat und/oder Hydroxyalkylacrylat und gegebenenfalls weiterem Monomer in Gegenwart vom jeweiligen Organopolysiloxan modifizierten Organopolysiloxanen, wobei die Siloxaneinheiten des Organopolysiloxananteils zu mindestens 40 Molprozent aus Monoorganosiloxaneinheiten bestehen und die Vernetzung vom Organopolysiloxan vor dem Ende der Polymerisation der vorstehend genannten Monomeren abgeschlossen ist, in Form von Kontaktlinsen oder als Bestandteile von Kontaktlinsen.

Aus DE-A-2 718 998 (offengelegt: 2. November 1978, Anmelder: Wacker-Chemie GmbH) ist ein Verfahren zum Herstellen von vernetzten, modifizierten Organopolysiloxanen durch Polymerisieren von mindestens einem mindestens eine aliphatische Mehrfachbindung enthaltendem Monomer mittels freier Radikale in Gegenwart von vernetzbarem bzw. vernetztem Organopolysiloxan mit mindestens 40 Molprozent Monoorganosiloxaneinheiten bekannt. DE-A-2 718 998 erwähnt jedoch keine Hydroxyalkylmethacrylate oder Hydroxyalkylacrylate.

Als Hydroxyalkylmethacrylate bzw. Hydroxyalkylacrylate sind bei der Herstellung der erfindungsgemäss verwendeten, modifizierten Organopolysiloxane solche der allgemeinen Formel

$$CH_2 = C(R)COOC_nH_{2n}OH,$$

worin R Wasserstoff oder Methyl und n 2 oder 3 ist, also 2-Hydroxyäthylmethacrylat, 2-Hydroxypropylmethacrylat, 3-Hydroxypropylmethacrylat, 2-Hydroxyäthylacrylat, 2-Hydroxypropylacrylat und 3-Hydroxypropylacrylat bevorzugt. Besonders bevorzugt sind 2-Hydroxyäthylmethacrylat und 2-Hydroxypropylmethacrylat.

Falls erwünscht, können Gemische aus verschiedenen Hydroxyalkylmethacrylaten und/oder Hydroxyalkylacrylate eingesetzt werden. Weiterhin kann zusäthlich zu Hydroxyalkylmethacrylat und/oder Hydroxyalkylacrylat mindestens ein weiteres Monomer, wobei dieses weitere Monomer ebenfalls eine olefinische Doppelbindung aufweist und mittels freier Radikale polymerisierbar ist, eingesetzt werden. Beispiele für solche anderen Monomeren mit einer olefinischen Doppelbindung sind Acrylsäure, Salze von Acrylsäure, Methacrylsäure, Salze von Methacrylsäure, von Hydroxylgruppen freie Ester der Acrylsäure oder der Methacrylsäure, wie Äthylacrylat, n-Butylacrylat, Methylmethacrylat und n-Butylmethacrylat, N-Vinylpyrrolidon, Styrol und Glycidylmethacrylat. Es kann auch mindestens ein Monomer mit mehr als einer olefinischen Doppelbindung, insbesondere mit zwei olefinischen Doppelbindungen, je Molekül, wie Divinylbenzol, Allylmethacrylat oder Äthylenglykoldimethacrylat, mitverwendet werden. Zumindest bei Mitverwendung von mindestens einem Monomer mit mehr als einer olefinischen Doppelbindung, können sogenannte IPN-Systeme entstehen. Die Mitverwendung von Monomer mit mehr als einer aliphatischen Doppelbindung ist jedoch keineswegs erforderlich und es werden überraschenderweise auch ohne eine solche Mitverwendung ausgezeichnete Ergebnisse erhalten.

Vorzugsweise werden jedoch andere mittels freier Radikale polymerisierbare Monomere als Hydroxyalkylmethacrylate oder Hydroxyalkylacrylate so gewählt und lediglich in solchen Mengen mitverwendet, dass das zu modifizierende Organopolysiloxan in dem Gemisch der modifizierenden Monomeren zumindest bei der Temperatur, bei der die Monomeren polymerisiert werden, löslich ist, insbesondere in Mengen von höchstens 75 Gewichtsprozent, bezogen auf das Gesamtgewicht von modifizierendem Monomer, eingesetzt.

Vorzugsweise bestehen die Siloxaneinheiten des Organopolysiloxananteils der erfindungsgemäss verwendeten modifizierten Organopolysiloxane zu mindestens 50 Molprozent, bevorzugter zu mindestens 60 Molprozent und insbesondere zu mindestens 90 Molprozent, aus Monoorganosiloxaneinheiten.

Vorzugsweise sind im Organopolysiloxananteil der erfindungsgemäss verwendeten modifizierten Organopolysiloxane die anderen Siloxaneinheiten als Monoorganosiloxaneinheiten Diorganosiloxaneinheiten, Triorganosiloxaneinheiten und/oder $SiO_{4/2}$-Einheiten. Dabei ist wiederum bevorzugt, dass der Anteil der Triorganosiloxaneinheiten und der $SiO_{4/2}$-Einheiten jeweils höchstens 5 Molprozent beträgt.

Monoorganosiloxaneinheiten können durch die Formel $R\,SiO_{3/2}$, Diorganosiloxaneinheiten kön-

nen durch die Formel $R_2SiO$ und Triorganosiloxaneinheiten können durch die Formel $R_3SiO_{1/2}$ wiedergegeben werden. In allen diesen Formeln bedeutet R jeweils gleiche oder verschiedene, einwertige, gegebenenfalls substituierte Kohlenwasserstoffreste, die vorzugsweise 1 bis 18 Kohlenstoffatome je Rest enthalten.

Beispiele für Kohlenwasserstoffreste R sind geradkettige oder verzweigte Alkylreste, wie der Methyl-, Äthyl-, N-Propyl-, Isopropyl-, n-Butyl- und sec.-Butylrest sowie Octyl-, Dodecyl- und Octadecylreste; Cycloalkylreste, wie der Cyclopentyl- und Cyclohexylrest; Alkenylreste, wie der Vinyl- und Allylrest; Arylreste, wie der Phenylrest, Alkarylreste, wie Tolylreste; und Aralkylreste, wie der Benzylrest.

Beispiele für substituierte Kohlenwasserstoffreste R sind halogenierte Kohlenwasserstoffreste, wie der 3,3,3-Trifluorpropylrest und der alpha,alpha,alpha-Trifluortolylrest sowie Chlorphenyl- und Dichlorphenylreste. Insbesondere wegen der leichteren Zugänglichkeit sind jedoch vorzugsweise mindestens 90% der Anzahl der SiC-gebundenen organischen Reste im Organopolysiloxananteil der erfindungsgemäss verwendeten modifizierten Organopolysiloxane Methylreste.

Vorzugsweise beträgt die Menge des Organopolysiloxananteils der erfindungsgemässen oder erfindungsgemäss verwendeten modifizierten Organopolysiloxane 20 bis 90 Gewichtsprozent, insbesondere 40 bis 80 Gewichtsprozent, jeweils bezogen auf das Gewicht des jeweiligen modifizierten Organopolysiloxans.

Vorzugsweise beträgt das mittlere Molekulargewicht des Organopolysiloxananteils mindestens 1000 und ist höchstens so hoch, dass das bei der Herstellung der erfindungsgemäss verwendeten modifizierten Organopolysiloxane eingesetzte Organopolysiloxan bei Raumtemperatur oder erhöhter Temperatur im Hydroxyalkylmethacrylat oder bzw. und Hydroxyalkylacrylat und gegebenenfalls mitverwendeten weiterem Monomer löslich ist.

Die erfindungsgemäss verwendeten modifizierten Organopolysiloxane können durch Polymerisation von mindestens einem Hydroxyalkylmethacrylat und/oder Hydroxyalkylacrylat und gegebenenfalls weiterem Monomer mittels freier Radikale in Gegenwart von mindestens einem durch Kondensation oder durch Anlagerung von Si-gebundenem Wasserstoff an Si-gebundene Alkenylgruppen vernetzbarem bzw. vernetztem Organopolysiloxan mit mindestens 40 Molprozent Monoorganosiloxaneinheiten, das im Hydroxyalkylmethacrylat und/oder Hydroxyalkylacrylat und gegebenenfalls mitverwendeten weiterem Monomer im wesentlichen gleichmässig verteilt ist, und erforderlichenfalls Vernetzung des Organopolysiloxans hergestellt werden, wobei die Polymerisation vom Hydroxyalkylmethacrylat und/oder Hydroxyalkylacrylat und gegebenenfalls weiterem Monomer in Gegenwart eines Kondensationskatalysators für das Organopolysiloxan bzw. eines die Anlagerung von Si-gebundenem Wasserstoff an Si-gebundene Alkenylgruppen fördernden Katalysators und nach Zusatz von mindestens einer Organosiliciumverbindung mit mindestens 2 Si-gebundenen Wasserstoffatomen je Molekül durchgeführt wird.

Wenn zur Herstellung der erfindungsgemäss verwendeten modifizierten Organopolysiloxane durch Kondensation vernetzbare Organopolysiloxane eingesetzt werden, so sind darin vorzugsweise alle kondensierbaren Gruppen Si-gebundene Hydroxylgruppen und/oder Alkoxygruppen mit 1 bis 8 Kohlenstoffatomen. Die oben genannten Beispiele für Alkylgruppen, soweit sie 1 bis 8 Kohlenstoffatome aufweisen, gelten im vollen Umfang auch für die Alkylgruppen in den Alkoxygruppen mit 1 bis 8 Kohlenstoffatomen. Vorzugsweise enthalten die Alkoxygruppen jedoch jeweils nur 1 bis 4 Kohlenstoffatome.

Wenn die zur Herstellung der erfindungsgemäss verwendeten modifizierten Organopolysiloxane eingesetzten Organopolysiloxane solche sind, die durch Kondensation vernetzbar sind und auch durch Kondensation vernetzt werden sollen, so müssen sie insgesamt mindestens 0,01 Gewichtsprozent Si-gebundene Hydroxylgruppen und/oder Alkoxygruppen aufweisen. Vorzugsweise enthalten sie jedoch insgesamt nur höchstens 5 Gewichtsprozent Si-gebundene Hydroxylgruppen und/oder Alkoxygruppen.

Wenn die zur Herstellung der erfindungsgemäss verwendeten modifizierten Organopolysiloxane eingesetzten Organopolysiloxane solche sind, die durch Anlagerung von Si-gebundenem Wasserstoff an Si-gebundene Alkenylgruppen vernetzbar sind und auch durch Anlagerung von Si-gebundenem Wasserstoff an Si-gebundene Alkenylgruppen vernetzt werden sollen, so müssen mindestens 0,1 Gewichtsprozent, vorzugsweise 1 bis 25% der Anzahl der SiC-gebundenen Reste im eingesetzten Organopolysiloxan Alkenylreste, vorzugsweise Vinylreste, sein.

Die freien Radikale für die Polymerisation von Hydroxyalkylmethacrylat und/oder Hydroxyalkylacrylat und gegebenenfalls weiterem Monomer in Gegenwart von zu modifizierendem Organopolysiloxan werden vorzugsweise durch organische peroxydische Verbindungen erzeugt. Es können jedoch auch andere Radikalbildner verwendet werden. Beispiele für solche anderen Radikalbildner sind Azoverbindungen, bei denen die beiden Stickstoffatome der Azogruppe an tertiäre Kohlenstoffatome gebunden sind und die restlichen Valenzen der tertiären Kohlenstoffatome durch Nitril-, Carboxyl-, Cycloalkylen- oder Alkylgruppen abgesättigt sind, enolisierbare alpha-Phenylcarbonylverbindungen, Sulfinsäuren und energiereiche Strahlen, wie alpha, beta- oder gamma-Strahlen oder Ultraviolett-Strahlen. Die Radikalbildung kann auch rein thermisch bewirkt werden.

Beispiele für die bevorzugten Mittel zur Erzeugung von freien Radikalen sind Diacylperoxyde, wie Benzoylperoxyd und Lauroylperoxyd; Ketoperoxyde, wie Acetonperoxyd und Cyclohexanonperoxyd; Kohlenwasserstoffperoxyde, wie tert.-Butylhydroperoxyd, Cumolhydroperoxyd und Decahydronaphthalinhydroperoxyd; Dikohlenwasserstoffperoxyde, wie Di-tert.-butylperoxyd und

Dicumylperoxyd; Perketale, wie 1,1-Di-tert.-butylperoxy-3,3,5-trimethylcyclohexan; Perester, wie tert.-Butylperbenzoat, tert.-Butylperoxyisopropylpercarbonat, tert.-Butylperpivalat, tert.-Butylperoktoat, tert.-Butylcyclohexylpercarbonat und tert.-Butylpermaleinat; schliesslich Acetylcyclohexansulfonylperoxyd.

Es können Gemische aus verschiedenen, freie Radikale erzeugenden Mitteln eingesetzt werden.

Die Menge an chemischem Mittel zu Erzeugung von freien Radikalen beträgt vorzugsweise 0,0005 bis 5 Gewichtsprozent, insbesondere 0,003 bis 2 Gewichtsprozent, jeweils bezogen auf das Gesamtgewicht von zu polymerisierendem Monomer und zu modifizierendem Organopolysiloxan.

Zur Herstellung der erfindungsgemäss verwendeten modifizierten Organopolysiloxane eingesetztes Hydroxyalkylmethacrylat und/oder Hydroxyalkylacrylat und ggf. weiteres Monomer wird vorzugsweise in Mengen von insgesamt 20 bis 60 Gewichtsprozent, bezogen auf das Gesamtgewicht von Hydroxyalkylmethacrylat, Hydroxyalkylacrylat, ggf. mitverwendetem weiterem Monomer und zu modifizierendem Organopolysiloxan, verwendet.

Die bei dem Polymerisieren von Hydroxyalkylmethacrylat und/oder Hydroxyalkylacrylat und gegebenenfalls mitverwendetem weiterem Monomer in Gegenwart von zu modifizierenden Organopolysiloxan angewandten Temperaturen und Drücke können die gleichen sein, wie bei den bisher bekannten Verfahren, bei denen aliphatische Mehrfachbindung enthaltendes Monomer in Gegenwart von Organopolysiloxan, gleichgültig ob dieses Organopolysiloxan Monoorganosiloxaneinheiten enthielt oder nicht, mittels freier Radikale polymerisiert wurde. Bevorzugt sind Temperaturen von 50 bis 200 °C und Drücke von 0,1 bis 20 bar (abs.).

Wenn die zur Herstellung der erfindungsgemäss verwendeten modifizierten Organopolysiloxane eingesetzten Organopolysiloxane solche sind, die durch Kondensation vernetzbar sind und auch durch Kondensation vernetzt werden sollen, so muss die Polymerisation von Hydroxyalkylmethacrylat und/oder Hydroxyalkylacrylat und gegebenenfalls weiterem Monomer in Gegenwart von zu modifizierendem Organopolysiloxan gleichzeitig auch in Gegenwart eines Kondensationskatalysators für das Organopolysiloxan durchgeführt werden.

Bevorzugt als Kondensationskatalysatoren sind Acylate, Alkoholate und Chelate, von Aluminium.

Es können Gemische aus verschiedenen Kondensationskatalysatoren eingesetzt werden.

Vorzugsweise wird Kondensationskatalysator in Mengen von 0,001 bis 3 Gewichtsprozent, bezogen auf das Gesamtgewicht von zu polymerisierendem Monomer und zu modifizierendem Organopolysiloxan, eingesetzt.

Wenn die zur Herstellung der erfindungsgemässen oder der erfindungsgemäss verwendeten modifizierten Organopolysiloxane eingesetzten Organopolysiloxane solche sind, die durch Anlagerung von Si-gebundenem Wasserstoff an Si-gebundene Alkenylgruppen vernetzbar sind und auch durch Anlagerung von Si-gebundenem Wasserstoff an Si-gebundene Alkenylgruppen vernetzt werden sollen, so muss die Polymerisation von Hydroxyalkylmethacrylat und/oder Hydroxyalkylacrylat und gegebenenfalls weiterem Monomer in Gegenwart von zu modifizierendem Organopolysiloxan gleichzeitig auch in Gegenwart eines die Anlagerung von Si-gebundenem Wasserstoff an Si-gebundene Alkenylgruppen fördernden Katalysators und nach Zusatz von mindestens einer Organosiliciumverbindung mit mindestens 2 Si-gebundenen Wasserstoffatomen je Molekül durchgeführt werden. Als die Anlagerung von Si-gebundenem Wasserstoff an Si-gebundene Alkenylgruppen fördernde Katalysatoren können dabei beliebige Stoffe eingesetzt werden, mit denen auch bisher die Anlagerung von Si-gebundenem Wasserstoff an Si-gebundene Alkenylruppen gefordert werden könnte. Beispiele für solche Anlagerungskatalysatoren sind metallisches und feinverteiltes Platin, Ruthenium, Rhodium, Palladium und Iridium, wobei sich diese Metalle jeweils auf Trägern, wie Siliciumdioxyd, Aluminiumoxyd oder Aktivkohle, befinden können, und Verbindungen oder Komplexe dieser Elemente, wie $Pt\ Cl_4$, $H_2Pt\ Cl_6 \cdot 6\ H_2O$, $Na_2Pt\ Cl_4 \cdot H_2O$, Platin-Olefin-Komplexe, Platin-Alkohol-Komplexe, Platin-Alkoholat-Komplexe, Platin-Äther-Komplexe, Platin-Aldehyd-Komplexe, Platin-Keton-Komplexe und Platin-Vinylsiloxan-Komplexe, insbesondere Platin-Divinyltetramethyldisiloxan-Komplexe, mit oder ohne Gehalt an nachweisbarem Halogen; ferner Eisen-, Nickel- und Kobaltcarbonyle.

Werden als die Anlagerung von Si-gebundenem Wasserstoff an Si-gebundene Alkenylgruppen fördernde Katalysatoren die oben genannten Edelmetalle, Platinverbindungen und/oder Platinkomplexe eingesetzt, so werden diese Katalysatoren vorzugsweise in Mengen von 0,5 bis 500 Gewichts-ppm (Gewichtsteilen je Million Gewichtsteilen), insbesondere 2 bis 400 Gewichts-ppm, jeweils berechnet als elementares Metall und bezogen auf das Gesamtgewicht von zu polymerisierendem Monomer und zu modifizierendem Organopolysiloxan, eingesetzt.

Als mindestens 2 Si-gebundene Wasserstoffatome je Molekül aufweisende Organosiliciumverbindungen können ebenfalls auch bei der Herstellung der erfindungsgemässen oder der erfindungsgemäss verwendeten modifizierten Organopolysiloxane alle Organosiliciumverbindungen mit mindestens 2 Si-gebundenen Wasserstoffatomen je Molekül verwendet werden, mit denen auch bisher Organopolysiloxane mit oder ohne Gehalt an Monoorganosiloxaneinheiten durch Anlagerung von Si-gebundenem Wasserstoff an Si-gebundene Alkenylgruppen vernetzt werden konnten. Es handelt sich dabei vorzugsweise um Organopolysiloxane mit Si-gebundenen Wasserstoffatomen, bei denen die anders als durch Wasserstoff- und Siloxansauerstoffatome abgesättigten Siliciumvalenzen durch Methylreste, gegebenenfalls neben Äthyl- und/oder Phenylresten, abgesättigt sind.

Organosiliciumverbindung mit mindestens 2 Si-gebundenen Wasserstoffatomen je Molekül wird vorzugsweise in Mengen von 0,1 bis 15 Si-gebundenen Wasserstoffatomen je Si-gebundener Alkenylgruppe eingesetzt.

Je nach Aktivität und Menge von Kondensationskatalysator bzw. von die Anlagerung von Si-gebundenem Wasserstoff an Si-gebundene Alkenylgruppen förderndem Katalysator verläuft die Vernetzung von Organopolysiloxan bei Raumtemperatur bis 220 °C und/oder mit unterschiedlicher Geschwindigkeit. Somit kann durch Wahl der Art und Menge von Kondensationskatalysator bzw. von die Anlagerung von Si-gebundenem Wasserstoff an Si-gebundene Alkenylgruppen förderndem Katalysator bewirkt werden, dass die Vernetzung vom in Hydroxyalkylmethacrylat und/oder Hydroxyalkylacrylat und ggf. mitverwendetem weiterem Monomer im wesentlichen gleichmässig verteilten und den jeweiligen Katalysator enthaltendem Organopolysiloxan vor der Polymerisation und/oder gleichzeitig mit der Polymerisation und/oder nach der Polymerisation von Hydroxyalkylmethacrylat und/oder Hydroxyalkylacrylat und ggf. mitverwendetem weiterem Monomer abläuft. Weil dadurch besonders transparente Produkte erhalten werden, ist Art und Menge von Kondensationskatalysator bzw. von die Anlagerung von Si-gebundenem Wasserstoff an Si-gebundene Alkenylgruppen förderndem Katalysator und/oder des Katalysatorsystems bzw. Inhibitor für die Polymerisation von Hydroxyalkylmethacrylat und/oder Hydroxyalkylacrylat und ggf. mitverwendetem weiterem Monomer so zu wählen, dass die Vernetzung vom in Hydroxyalkylmethacrylat und/oder Hydroxyalkylacrylat und ggf. mitverwendetem weiterem Monomer im wesentlichen gleichmässig verteilten und den jeweiligen Katalysator enthaltenden Organopolysiloxan vor dem Beginn der Polymerisation von Hydroxyalkylmethacrylat und/oder Hydroxyalkylmethacrylat und ggf. mitverwendetem weiterem Monomer, zumindest aber vor dem Ende dieser Polymerisation, abgeschlossen ist.

Weiterhin ist die Vernetzung vom Organopolysiloxan durch Kondensation bevorzugt. Ebenso ist es bevorzugt, die Herstellung der erfindungsgemässen modifizierten Organopolysiloxane und damit das erfindungsgemässe Verfahren auch in Kontakt mit einer konvexe Formoberfläche, die annähernd oder völlig der Form der Hornhaut der menschlichen Auges entspricht, auszuführen, wodurch die konkave Linsenoberfläche gebildet wird, während die konvexe Linsenoberfläche hiernach durch maschinelle Behandlung, wie Schleifen, gebildet wird.

Somit ist Gegenstand der Erfindung auch ein Verfahren zur Herstellung von Kontaktlinsen durch Polymerisation von Hydroxyalkylmethacrylat und/oder Hydroxyalkylacrylat und gegebenenfalls weiterem Monomer mittels freier Radikale in Gegenwart von Organopolysiloxan in Kontakt mit einer konvexen Fromoberfläche, die annähernd oder völlig der Form der Hornhaut des menschlichen Auges entspricht, dadurch gekennzeichnet, dass als Organopolysiloxan solches mit mindestens 40 Molprozent Monoorganosiloxaneinheiten eingesetzt wird, dieses Organopolysiloxan durch Kondensation vernetzbar bzw. vernetzt ist und Kondensationskatalysator mitverwendet wird, wobei Art und Menge von Kondensationskatalysator und/oder Katalysatorsystem bzw. Inhibitor für die Polymerisation von Hydroxyalkylmethacrylat und/oder Hydroxyalkylacrylat und gegebenenfalls mitverwendetem weiterem Monomer so gewählt werden, dass die Vernetzung von in Hydroxyalkylmethacrylat und/oder Hydroxyalkylacrylat und gegebenenfalls mitverwendetem weiterem Monomer im wesentlichen gleichmässig verteilten und Kondensationskatalysator enthaltendem Organopolysiloxan vor dem Beginn der Polymerisation von Hydroxyalkylmethacrylat und/oder Hydroxyalkylacrylat und gegebenenfalls mitverwendetem weiterem Monomer, zumindest aber vor dem Ende dieser Polymerisation abgeschlossen ist.

Zusätzlich zu Organopolysiloxan mit mindestens 40 Molprozent Monoorganosiloxaneinheiten, Vernetzungsmittel für Organopolysiloxan und Hydroxyalkylmethacrylat und/oder Hydroxyalkylacrylat und ggf. mitverwendetem weiterem Monomer bzw. Polymerisat aus solchem Monomer können die erfindungsgemässen modifizierten Organopolysiloxane enthalten bzw. bei ihrer Herstellung mitverwendet werden andere Stoffe, die bei der Herstellung von Polymerisaten aus mindestens einem mindestens eine aliphatische Mehrfachbindung enthaltendem Monomer mittels freier Radikale und/oder bei der Bereitung von Massen auf Grundlage von vernetzbarem Organopolysiloxan eingesetzt werden können. Beispiele für solche anderen Stoffe sind den Produkten eine gewünschte Farbe gebende Pigmente oder lösliche Farbstoffe, Füllstoffe, wie pyrogen erzeugtes Siliciumdioxyd, Titandioxyd und/oder Glasfasern, Sensibilisatoren, Beschleuniger, wie Kobalt-2-äthylhexoat, Promotoren, Inhibitoren, wie Hydrochinonmonomethyläther, und Regler.

Die erfindungsgemässen oder die erfindungsgemäss hergestellten modifizierten Organopolysiloxane sind zwar hydrophil, jedoch unlöslich in Wasser. Falls erwünscht, kann ihre Oberfläche besonders stark hydrophil gemacht werden, indem durch Behandlung mit Säuren oder Basen von der Oberfläche ein Teil des Organopolysiloxans entfernt wird.

Die erfindungsgemässen modifizierten Organopolysiloxane werden als Bestandteile von Kontaktlinsen verwendet, so insbesondere als Linsenkörpermaterial.

Während der Herstellung der erfindungsgemässen modifizierten Organopolysiloxane und damit während des erfindungsgemässen Verfahrens kann eine Formgebung der reagierenden Masse durch Giessen, Pressen, Spritzgiessen oder Spritzpressen erfolgen und aus den so erhaltenen Formkörpern können Kontaktlinsen geformt werden.

Beispiel 1

65 Gewichtsteile eines Organopolysiloxans aus

98 Molprozent $CH_3SiO_{3/2}$-Einheiten und 2 Molprozent $(CH_3)_2SiO$-Einheiten mit 2,6 Gewichtsprozent Si-gebundenen Hydroxylgruppen und einem mittleren Molekulargewicht von etwa 3000 werden in 35 Gewichtsteilen 2-Hydroxyäthylmethacrylat unter Zusatz von 0,03 Gewichtsteilen Hydrochinonmonomethyläther, 1,0 Gewichtsteilen Aluminiumtriacetylacetonat und 0,1 Gewichtsteilen Dicumylperoxid gelöst. Die Lösung wird in eine Pressform gegeben und unter einem Druck von 10 bar (abs.) 5 Minuten auf 200 °C erwärmt. Es wird ein optisch klarer Formkörper erhalten, der sich ausgezeichnet mechanisch bearbeiten lässt.

Beispiel 2

75 Gewichtsteile des in Beispiel 1 beschriebenen Organopolysiloxanes werden in einem Gemisch aus 12 Gewichtsteilen n-Butylmethacrylat, 12 Gewichtsteilen 2-Hydroxyäthylmethacrylat, 1 Gewichtsteil Äthylenglykoldimethacrylat, 0,03 Gewichtsteilen Hydrochinonmonomethyläther, 1 Gewichtsteil Aluminium-tri-sec.-butylat und 0,1 Gewichtsteilen Dicumylperoxid gelöst.

Die Lösung wird in Reagenzgläsern (160 mm × 15 mm) in einem Autoklaven unter einem Pressluftdruck von 10 bar (abs.) 20 Minuten auf 160 °C erwärmt.

Nach dem Zerschlagen der Reagenzgläser werden optisch klare Formkörper erhalten, die sich ausgezeichnet mechanisch bearbeiten lassen.

**Patentansprüche**

1. Verwendung von hydrophilen, vernetzten, durch Polymerisation von Hydroxyalkylmethacrylat und/oder Hydroxyalkylacrylat und gegebenenfalls weiterem Monomer in Gegenwart vom jeweiligen Organopolysiloxan modifizierten Organopolysiloxanen, wobei die Siloxaneinheiten des Organopolysiloxananteils zu mindestens 40 Molprozent aus Monorganosiloxaneinheiten bestehen und die Vernetzung von Organopolysiloxan vor dem Ende der Polymerisation der vorstehend genannten Monomeren abgeschlossen ist, in Form von Kontaktlinsen oder als Bestandteile von Kontaktlinsen.

2. Verfahren zur Herstellung von Kontaktlinsen durch Polymerisation von Hydroxyalkylmethacrylat und/oder Hydroxyalkylacrylat und gegebenenfalls weiterem Monomer mittels freier Radikale in Gegenwart von Organopolysiloxan in Kontakt mit einer konvexen Formoberfläche, die annähernd oder völlig der Form der Hornhaut des menschlichen Auges entspricht, dadurch gekennzeichnet, dass als Organopolysiloxan solches mit mindestens 40 Molprozent Monoorganosiloxaneinheiten eingesetzt wird, dieses Organopolysiloxan durch Kondensation vernetzbar bzw. vernetzt ist und Kondensationskatalysator und/oder Katalysatorsystem bzw. Inhibitor für die Polymerisation von Hydroxyalkylmethacrylat und/oder Hydroxyalkylacrylat und gegebenenfalls mitverwendetem weiterem Monomer so gewählt werden, dass die Vernetzung von in Hydroxyalkylmethacrylat und/oder Hydroxyalkylacrylat und gegebenenfalls mitverwendetem weiterem Monomer im wesentlichen gleichmässig verteilten und Kondensationskatalysator enthaltendem Organopolysiloxan vor dem Begin der Polymerisation von Hydroxylalkylmethacrylat und/oder Hydroxyalkylacrylat und gegebenenfalls mitverwendetem weiterem Monomer, zumindest aber vor dem Ende dieser Polymerisation abgeschlossen ist.

**Revendications**

1. Application de polyorganosiloxanes réticulés et hydrophiles qui ont été modifiés par polymérisation d'un méthacrylate d'hydroxyalkyle et/ou d'un acrylate d'hydroxyalkyle et éventuellement d'un monomère supplémentaire en présence du polyorganosiloxane correspondant, les motifs siloxaniques de la partie polyorganosiloxanique étant constitués, pour au moins 40% en moles, de motifs monoorganosiloxaniques et la réticulation du polyorganosiloxane ayant été achevée avant la fin de la polymérisation des monomères précédemment mentionnés, sous la forme de lentilles de contact ou comme constituants de lentilles de contact.

2. Procédé de fabrication de lentilles de contact par polymérisation d'un méthacrylate d'hydroxyalkyle et/ou d'un acrylate d'hydroxyalkyle et éventuellement d'un monomère supplémentaire, au moyen de radicaux libres, en présence d'un polyorganosiloxane, au contact d'une surface de moulage convexe correspondant à peu près ou totalement à la forme de la cornée de l'œil humain, procédé caractérisé en ce qu'on se sert d'un polyorganosiloxane contenant au moins 40% en moles de motifs monoorganosiloxaniques, ce polyorganosiloxane est réticulable ou réticulé par condensation, et on utilise en même temps un catalyseur de condensation, la nature et la quantité du catalyseur de condensation et/ou du système catalytique ou de l'inhibiteur pour la polymérisation du méthacrylate d'hydroxyalkyle et/ou de l'acrylate d'hydroxyalkyle et du monomère supplémentaire éventuel étant choisies de telle façon que la réticulation du polyorganosiloxane réparti uniformément, pour l'essentiel, dans le méthacrylate d'hydroxyalkyle et/ou l'acrylate d'hydroxyalkyle et le monomère supplémentaire éventuel, et contenant le catalyseur de condensation, soit terminée si-non avant le début de la polymérisation du méthacrylate d'hydroxyalkyle et/ou de l'acrylate d'hydroxyalkyle et du monomère supplémentaire éventuel, du moins avant la fin de cette polymérisation.

**Claims**

1. Use of hydrophilic, crosslinked organopolysiloxanes modified by polymerising a hydroxyalkyl methacrylate and/or hydroxyalkyl acrylate and, optionally, a further monomer, in the presence of the particular organopolysiloxane, at least 40 mole % of the siloxane units of the organopolysiloxane portion consisting of monoorganosiloxane units, and the crosslinking of the organopolysiloxane being completed before the end of the polymerisation of the above-mentioned

monomers, in the form of contact lenses or as component parts of contact lenses.

2. Process for the manufacture of contact lenses by means of free-radical polymerisation of a hydroxyalkyl methacrylate and/or hydroxyalkyl acrylate and, otpionally, a further monomer, in the presence of an organopolysiloxane, in contact with a convex shaping surface which corresponds approximately or completely to the shape of the cornea of the human eye, characterised in that the organopolysiloxane used is one having at least 40 mole % of monoorganosiloxane units, the organopolysiloxane can be or is crosslinked by condensation, and a condensation catalyst is co-used, the type and amount of the condensation catalyst and/or catalyst system and inhibitor, respectively, for the polymerisation of the hydroxyalkyl methacrylate and/or hydroxyalkyl acrylate and optionally co-used further monomer being so chosen that the cross linking of the organopolysiloxane which contains the condensation catalyst and is substantially uniformly distributed in the hydroxyalkyl methacrylate and/or hydroxyalkyl acrylate and optionally co-used further monomer is completed before the beginning of the polymerisation of the hydroxyalkyl methacrylate and/or hydroxyalkyl acrylate and optionally co-used further monomer, and at least before the end of this polymerisation.